# EUROPEAN PATENT SPECIFICATION

(11) **EP 4 554 406 B1**
(45) Date of publication and mention of the grant of the patent: **25.02.2026**
(21) Application number: 23761789.9
(22) Date of filing: 21.08.2023
(51) Int. Cl.: A23L 27/00, A23L 17/60, A23L 13/00

(54) **FOOD PRODUCT COMPRISING A SEAWEED CONCENTRATE OR PRODUCT DERIVED THEREFROM**
NAHRUNGSMITTEL, DAS EIN MEERESALGENKONZENTRAT ODER EIN DARAUS HERGESTELLTES PRODUKT ENTHÄLT
PRODUIT ALIMENTAIRE COMPRENANT UN CONCENTRÉ D'ALGUES OU UN PRODUIT DÉRIVÉ DE CELUI-CI

(30) Priority: 24.08.2022 EP 22191841
(43) Date of publication of application: 21.05.2025
(73) Proprietor: Unilever IP Holdings B.V., 6708 WH Wageningen (NL)
(72) Inventor: FRIEDL, Thomas, Georg, 6708 WH Wageningen (NL); JACOBS, Renate, Gemma, Jacobine, Maria, 6708 WH Wageningen (NL); KOCH, Jens, 6708 WH Wageningen (NL); RUBESA, Tino, 6708 WH Wageningen (NL); SABATER-LUENTZEL, Christopher, 6708 WH Wageningen (NL); VERMANDEL, Evert, 6708 WH Wageningen (NL); ZANTINGE, Anne, 6708 WH Wageningen (NL)
(74) Representative: Boerma, Caroline
(86) International application number: PCT/EP2023/072931
(87) International publication number: WO 2024/042034

(56) References cited:
- GARICANO VILAR ELENA ET AL: "Volatile compounds of six species of edible seaweed: A review", ALGAL RESEARCH, vol. 45, 1 January 2020 (2020-01-01), NL, pages 101740, XP093018786, ISSN: 2211-9264, DOI: 10.1016/j.algal.2019.101740
- MOURITSEN OLE G ET AL: "Umami taste, free amino acid composition, and volatile compounds of brown seaweeds", JOURNAL OF APPLIED PHYCOLOGY, KLUWER, DORDRECHT, NL, vol. 31, no. 2, 26 September 2018 (2018-09-26), pages 1213 - 1232, XP036753529, ISSN: 0921-8971, [retrieved on 20180926], DOI: 10.1007/S10811-018-1632-X
- ANONYMOUS: "Tomato Seaweed Egg Drop Soup", 19 February 2022 (2022-02-19), pages 1 - 3, XP093019585, Retrieved from the Internet <URL:https://www.asiancookingmom.com/tomato-seaweed-egg-drop-soup> [retrieved on 20230131]

## Description

### Field of the invention

The invention relates to a food product having a savoury and/or meaty flavour which is at least partially obtained from a seaweed concentrate or product derived therefrom. In particular, the invention relates to a process for producing a food product having a savoury and/or meaty flavour. The invention further relates to the use of a seaweed concentrate or a seaweed derived flavour product for the production of a food product having a savoury and/or meaty flavour.

The present invention also relates to a method for the manufacturing of the food product.

### Background of the invention

Many industrially prepared foods are particularly attractive to potential consumers primarily because of their typical flavours. Flavouring systems are of vital importance in savoury food manufacturing.

Various natural and unnatural compositions and/or components have been added to foods, beverages, and/or comestible (edible) compositions to improve their taste. One of the five known basic tastes is the "savoury" or "umami" flavour of monosodium glutamate ("MSG"), which is now commonly added to many food and beverage compositions to desirably improve their "savoury" flavour. Umami describes the savouriness, deliciousness or succulence of a food and is considered by many to represent a fifth taste dimension.

Therefore, it is no surprise that the food industry dealing with these product segments shows great interest in the use of food or food ingredients carrying the typical umami taste and flavour enhancement systems. At the same time, one of the main concerns of manufacturers of savoury food is how to provide the consumer with tasty foods while complying with increasingly severe local legal constraints concerning the use of many potent flavouring systems.

Thus, in the more recent industry of food preparation, there is a clear desire for enhancing a savoury and/or meaty flavour over the entire range of savoury food products without the use of chemically derived flavour ingredients being needed.

In addition, there is growing trend amongst consumers to replace meat with so-called meat analogues at least for a part of the week, so called flexitarians. It appears that the general public coming from a habit of eating meat is looking for meat-free alternative to replace the real-meat equivalent.

The increasing number of consumers that have rearranged their type of nutrition to a meat-free or meat-reduced nutrition also requires the food industry to provide the consumer with tasty foods having a pleasant meat or meat-like taste despite no meat or meat derived ingredient being present.

Meanwhile, several sources have been used for providing a meat-like taste, including beans, peas, soybean or seaweed.

Even though a high interest and effort exists in optimizing the meat-like taste, such products still provide several undesired / unpleasant taste impressions and thus reduce the pleasure of meat-free or meat-reduced nutrition.

Flavour compositions obtained from natural sources have been described in the art.

In EP2793616 a flavour composition having an umami flavour obtained from the blanching or cooking water of vegetables is described.

EP1344459 describes a seasoning composition useful for imparting umami taste to food products comprising a mixture of nucleotide and organic acids or salts thereof. GARICANO VILAR ELENA ET AL: "Volatile compounds of six species of edible seaweed: A review", ALGAL RESEARCH, vol. 45, 2020-01-01, page 101740, describes the volatile components of six species of edible seaweed.

MOURITSEN OLE G ET AL: "Umami taste, free amino acid composition, and volatile compounds of brown seaweeds", JOURNAL OF APPLIED PHYCOLOGY, 2018-09-26, pages 1213-1232, describes a comparative analysis of the free amino acid contents of 20 different species of brown seaweeds.

However, the taste of meat is a rather complex taste. Thus, to provide a meat-like taste with meat-free products, several taste descriptors need to be adapted. These descriptors range from "meaty", "fatty", "brothy" or "juicy" to "roasted", "umami" or "mouthfeel" and further descriptors. Furthermore, it is often observed that a meat-like taste can be approximated, however, additional off-notes are frequently present, which need to be avoided.

Therefore, a high need exists for improving the possibilities of imitating the complex taste of meat to enable a meat-free or meat-reduced nutrition without renouncing the original taste of meat. Thus, a high need exists for improved flavour compositions, which impart or enhance a savoury and/or meaty flavour.

Savoury food products comprising flavour ingredients that provide a meat-like taste and do not comprise any meat or meat derived ingredients are in particular highly desired in the food industry. Even more desired are food products comprising flavour ingredients which provide improved or enhanced savoury and/or meaty flavour, in particular a meat-like taste, and preferably with reduced undesired/unpleasant taste impressions. This desire is even more present for food products not comprising any meat or meat derived products.

Thus, there is still a need in the foods industry and with consumers for savoury food products wherein the meatlike flavour components are based on natural ingredients only, do not comprise any meat or meat derived ingredients and have a pleasant savoury and/or meat-like taste.

Even more, the use of such savoury food products is even more appreciated in both the foods industry and with consumers for ready to use food products that can be applied in the kitchen for the preparation of any meal.

One of the objects of the current invention is to provide for food products that meet the needs and desires as indicated above, even when no meat or meat derived ingredients are present. It was found that the presence of a seaweed concentrate or products derived therefrom, already enhances the savoury and/or meaty flavour desired, and that such a food product comprising at least three components from the group of 2-methylbutyraldehyde, 5-methylfurfural, furfural, 2(E)-decenal, and isobutyr aldehyde provides for an even further improved meat-like taste.

The current invention now provides food products having a savoury and/or meaty flavour which is derived from seaweed and further flavour components. In a further preferred embodiment such food products do not comprise any flavour ingredients comprising any meat or meat derived ingredients. In an even further preferred embodiment, such food products are free of any meat or meat derived products.

The current invention provides for a food product comprising a seaweed concentrate or product derived therefrom, wherein the food product comprises at least three components from the group of 2-methylbutyraldehyde, 5-methylfurfural, furfural, 2(E)-decenal, and isobutyr aldehyde.

Such products are also suitable to improve or enhance a savoury and/or meaty flavour already present, even in food products comprising meat or meat derived ingredients.

The food products of the present invention suitably are prepared by combining an edible product and a flavour composition comprising at least three components from the group of 2-methylbutyraldehyde, 5-methylfurfural, furfural, 2(E)-decenal, and isobutyr aldehyde. Preferably, the food products of the present invention are prepared by combining an edible product and a flavour composition comprising a seaweed concentrate or product derived therefrom and wherein at least three components from the group of 2-methylbutyraldehyde, 5-methylfurfural, furfural, 2(E)-decenal, and isobutyr aldehyde are present.

### Detailed description of the invention

### Definitions

As used herein the term "comprising" encompasses the terms "consisting essentially of" and "consisting of". Where the term "comprising" or "containing" is used, the listed steps or options need not be exhaustive.

Unless otherwise specified, numerical ranges expressed in the format "from x to y" are understood to include x and y.

In specifying any range of values or amounts, any particular upper value or amount can be associated with any particular lower value or amount.

Except in the examples and comparative experiments, or where otherwise explicitly indicated, all numbers are to be understood as modified by the word "about".

All percentages and ratios contained herein are calculated by weight unless otherwise indicated.

As used herein, the indefinite article "a" or "an" and its corresponding definite article "the" means at least one, or one or more, unless specified otherwise.

The various features of the present invention referred to in individual sections above apply, as appropriate, to other sections mutatis mutandis. Consequently, features specified in one section may be combined with features specified in other sections as appropriate. Any section headings are added for convenience only and are not intended to limit the disclosure in any way.

Where in this specification reference is made to the amount of seaweed, the amount of seaweed indicated refers to dried seaweed unless otherwise indicated. The dried seaweed as referred to will contain less than 10 wt.%, preferably less than 8 wt.% of remaining water, whereas suitably, the dried seaweed will contain around 6 or 5 wt.% of water.

In this specification, the words concentrate and extract are used interexchange-ably.

### Food products

The current invention provides for a food product containing a seaweed concentrate or product derived therefrom, the food product comprising at least three components from the group of 2-methylbutyraldehyde, 5-methylfurfural, furfural, 2(E)-decenal, and isobutyr aldehyde.

It was surprisingly found that such food products comprising such flavour components provide a particularly advantageous, particularly authentic, meat-like taste. This was also observed for products not comprising any meat or meat derived ingredients.

This observation was even more pronounced where the product comprises at least 4, and preferably all 5 from the group of 2-methylbutyraldehyde, 5-methylfurfural, furfural, 2(E)-decenal, and isobutyr aldehyde. In particular, food products further containing myristic acid and palmitic acid, and optionally, at least one of lauric acid and oleic acid were shown to have a reduced undesired/unpleasant taste impression which is often observed for meaty flavours of the state-of-the-art.

The food product of the invention preferably further comprises glutamate and at least 2 of AMP (adenosine monophosphate), CMP (cytidine monophosphate), GMP (guanosine monophosphate) and UMP (uridine monophosphate), and preferably at least 3, and more preferred all of AMP, CMP, GMP and UMP. At least part of the glutamate and the at least two of AMP, CMP, GMP and UMP are suitably obtained from the seaweed concentrate or product derived therefrom. Suitably, these can be obtained from seaweed by the heating process as described herein. It is believed that the presence of at least two of those ribonucleotides provide a significant enhancement to the umami flavour obtained from glutamate and enhances or even introduces the presence of the meaty notes in the flavour of the obtained seaweed boiling liquid, especially in the seaweed concentrate obtained therefrom.

In a further preferred embodiment, the food products of the invention comprise myristic acid and/or palmitic acid, and more preferred, of these two, at least myristic acid is present. Advantageously, the composition further comprises at least one of lauric acid and oleic acid.

The invention relates to food products that can be consumed as such, or that are ready to use in areas where meals are prepared such as in the kitchen by consumers, but in particular in the foods industry, such as in industrial kitchens, restaurants, snack bars and the like.

Food products, in particular savoury food products can be, for example, soups, sauces, bouillons, savoury concentrates, dressings such as vinaigrettes and salad dressings, seasonings, condiments, snacks, meat analogues and /or meat extender and/or meat substitutes. Thus, in one embodiment of the invention, the food product is selected from soups, sauces, bouillons, savoury concentrates, dressings such as vinaigrettes and salad dressings, seasonings, condiments, snacks, meat analogues and /or meat extenders and/or meat substitutes.

Here, a savoury concentrate refers to a concentrate that typically serves to prepare readyto-eat compositions. A savoury concentrate typically has the form of a powder, a granulate, a paste, a gel, or a shaped solid or tablet. Thus, savoury concentrates include for instance dry soups, dry sources, bouillon powders, bouillon cubes, meal-makers, gelled concentrates and the like.

The food products of the invention comprising the flavour composition were found to have a particularly advantageous, particularly authentic, meat-like taste. It was unexpectedly found that the flavour compositions according to the invention provide a particularly advantageous taste impressions such as "meaty", "fatty", "brothy", "juicy", "roasted", "umami" or "mouthfeel". It was further found that undesired / unpleasant taste impressions, such as "green", "kombu" (i.e. an algae-like taste impression) "fishy", "beany", "earthy", "bitter", and/or "chalky" are reduced when comparing similar vegetarian or vegan food products of the art and those according to the invention.

The benefits of the invention are in particular profound where the food product is a meat analogue and /or meat extender and/or meat substitute. Thus, in a particularly preferred embodiment the food product is a meat analogue and /or meat extender and/or meat substitute.

The seaweed concentrate or product derived therefrom comprising food product of the invention preferably comprises
a) 2-methylbutyraldehyde
b) 5-methylfurfural,
c) furfural,
d) 2(E)-decenal,
e) isobutyr aldehyde,
f) myristic acid,
g) palmitic acid, and
h) optionally: lauric acid, and
i) optionally: oleic acid,
wherein the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the composition.

In a further preferred embodiment thereof, the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition.

In another preferred embodiment, the weight amount of each of components a) - g) present in the food product of the invention is more than 0 parts by weight.

In a more preferred embodiment, the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the composition, and is the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition, and is the weight amount of each of components a) - g) present in the food product of the invention more than 0 parts by weight.

It is preferred that the total amount of myristic acid and palmitic acid together is ≤ 40 parts by weight, preferably ≤ 35, further preferred ≤ 30, even further preferred ≤ 25, more preferred ≤ 20, and most preferred ≤ 15 parts by weight, based on the total weight of the composition.

The total amount of lauric acid and oleic acid in the food product is preferably ≤ 5.5 parts by weight, further preferred ≤ 4.5, even further preferred ≤ 3.5, more preferred ≤ 3, and most preferred ≤ 2.75 parts by weight, based on the total weight of the composition.

The food product of the invention was found to have the flavour and taste characteristics commonly found for products in which meat or meat derived flavour ingredients are used for enhancing the flavour of the food product.

Furthermore, it is preferred that in the food product of the invention, component a) is present in an amount of at least 15 parts by weight, more preferred at least 20 parts by weight, and further preferred at least 25 parts by weight, based on the total weight of the food composition. In another preferred embodiment thereof, component b) is present in an amount of at least 1.5 parts by weight, more preferred at least 2 parts by weight, and further preferred at least 2.5 parts by weight, based on the total weight of the food composition.

In another preferred embodiment thereof, component c) is present in an amount of at least 1.5 parts by weight, more preferred at least 2 parts by weight, and further preferred at least 2.5 parts by weight, based on the total weight of the food composition.

In another preferred embodiment thereof, component d) is present in an amount of at least 1 parts by weight, more preferred at least 2 parts by weight, further preferred at least 3 parts by weight, and most preferred at least 4 parts by weight based on the total weight of the food composition.

In another preferred embodiment thereof, component e) is present in an amount of at least 1 parts by weight, more preferred at least 1.5 parts by weight, and further preferred at least 2 parts by weight, based on the total weight of the food composition.

Further preferred embodiments of this invention include the components a) to e) being present in any combination of the amounts indicated for the preferred embodiments indicated above.

Component f) is suitably present in an amount of ≤ 35 parts by weight, preferably ≤ 30 parts by weight, ≤ 25 parts by weight, further preferred ≤ 20 parts by weight, more preferred ≤ 15 parts by weight, ≤ 10 parts by weight, and most preferred ≤ 5 parts by weight, of component f), based on the total weight of the food composition, and/or
component g) is present in an amount of ≤ 8.25 parts by weight, preferably ≤ 8 parts by weight, and further preferred ≤ 7.5 parts by weight, based on the total weight of the food composition.

### Process for making the food product

The food product according to the invention contains a seaweed concentrate or product derived therefrom which is favourably introduced by the addition of a flavour composition that is or comprises a seaweed concentrate, or product derived therefrom, to an edible product.

The food product can be prepared in any manner commonly known in the art. For example, the food product can be obtained by combining an edible product and one or more flavour compositions.

For the preparation of the food product of the invention comprising a seaweed concentrate or product derived therefrom, the flavour composition comprises at least 3, preferably 4, and further preferred all 5 from the group of 2-methylbutyraldehyde, 5-methylfurfural, furfural, 2(E)-decenal, and isobutyr aldehyde. Alternatively, the one or more of this group is obtained from ingredients used for the preparation of the flavour composition in addition to seaweed.

In its further preferred embodiment, the invention concerns the production of a food product by combining an edible product and a flavour composition comprising a seaweed concentrate or product derived therefrom, wherein the flavour composition comprises at least 3, preferably 4, and further preferred all 5 from the group of 2-methylbutyraldehyde, 5-methylfurfural, furfural, 2(E)-decenal, and isobutyr aldehyde.

In a further preferred embodiment, the invention concerns the production of a food product comprising a seaweed concentrate by combining an edible product and a flavour composition, wherein the flavour composition comprises
a) 2-methylbutyraldehyde
b) 5-methylfurfural,
c) furfural,
d) 2(E)-decenal,
e) isobutyr aldehyde,
f) myristic acid,
g) palmitic acid, and
h) optionally: lauric acid, and
i) optionally: oleic acid,
wherein the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the composition. In a further preferred embodiment thereof, the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition.

Edible food products in this context are products that can be eaten as such, and include products of which their taste can be (further) improved by the addition of a flavour ingredient or flavour composition. The edible food products can be, for example soups, sauces, bouillons, savoury concentrates, dressings such as vinaigrettes and salad dressings, seasonings, condiments, snacks, meat analogues and/or meat extender and/or meat substitutes of which the taste can be enhanced or improved by the addition of a flavour ingredient or flavour composition.

In a further preferred embodiment, the food product according to the invention is produced by combining an edible product and a flavour composition comprising a seaweed concentrate or product derived therefrom, and wherein the flavour composition comprises
a) 2-methylbutyraldehyde,
b) 5-methylfurfural,
c) furfural,
d) 2(E)-decenal,
e) isobutyr aldehyde,
f) myristic acid,
g) palmitic acid, and
h) optionally: lauric acid, and
i) optionally: oleic acid,

wherein the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the flavour composition; and
wherein preferably the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the flavour composition.

In a preferred embodiment thereof, component a) is present in an amount of at least 15 parts by weight, more preferred at least 20 parts by weight, and further preferred at least 25 parts by weight, based on the total weight of the flavour composition. In another preferred embodiment thereof, component b) is present in an amount of at least 1.5 parts by weight, more preferred at least 2 parts by weight, and further preferred at least 2.5 parts by weight, based on the total weight of the flavour composition.

In another preferred embodiment thereof, component c) is present in an amount of at least 1.5 parts by weight, more preferred at least 2 parts by weight, and further preferred at least 2.5 parts by weight, based on the total weight of the flavour composition.

In another preferred embodiment thereof, component d) is present in an amount of at least 1 parts by weight, more preferred at least 2 parts by weight, further preferred at least 3 parts by weight, and most preferred at least 4 parts by weight based on the total weight of the flavour composition.

In another preferred embodiment thereof, component e) is present in an amount of at least 1 parts by weight, more preferred at least 1.5 parts by weight, and further preferred at least 2 parts by weight, based on the total weight of the flavour composition.

Further preferred embodiments of this invention include the components a) to e) being present in any combination of the amounts indicated for the preferred embodiments indicated above.

Component f) is suitably present in an amount of ≤ 35 parts by weight, preferably ≤ 30 parts by weight, ≤ 25 parts by weight, further preferred ≤ 20 parts by weight, more preferred ≤ 15 parts by weight, ≤ 10 parts by weight, and most preferred ≤ 5 parts by weight, of component f), based on the total weight of the flavour composition, and/or
component g) is present in an amount of ≤ 8.25 parts by weight, preferably ≤ 8 parts by weight, and further preferred ≤ 7.5 parts by weight, based on the total weight of the flavour composition.

In a preferred embodiment, at least one, and preferably both components f) and g) are present in an amount of >0, based on the total weight of the flavour composition.

In another preferred embodiment, component h) is present in an amount of ≤ 1 parts by weight, preferably ≤ 0.5 parts by weight, preferably ≤ 0.25 parts by weight, based on the total weight of the flavour composition.

In another preferred embodiment, the total weight amount of flavour components present comprise component i) in an amount of ≤ 4 parts by weight, preferably ≤ 3 parts by weight, and more preferred ≤ 2.75 parts by weight, based on the total weight of the flavour composition.

In a preferred embodiment for producing the food product of the invention, an edible product and a flavour composition are combined, and the flavour composition is prepared by the process described herein below.

The food product according to the invention contains a seaweed concentrate or product derived therefrom which is favourably introduced by the addition of a flavour composition that comprises a seaweed concentrate or product derived therefrom.

The flavour composition suitably is prepared as described herein and combined with an edible product before, during, or after the preparation of the edible product. Where applicable, after combining the edible product and a flavour composition, a further processing step, such as mixing, freezing or heating can be applied for the preparation of the food product.

The flavour composition can be in any format, such as a liquid, and gel or jelly, or can be a solid such as a powder, granulate, or (semi) solid tablet prior to it being combined with the edible product.

Thus, in a further preferred embodiment of the invention, the invention concerns a process for producing a food product comprising the combining of an edible product and a flavour composition, wherein the flavour composition is obtained by:
a. preparing a seaweed concentrate by mixing fresh or dried seaweed and water, and optionally, adjusting the pH of the mixture to a pH in the range of from 6.5 to 9.5, and heating the so obtained mixture to a temperature in the range of 100 to 140°C and maintaining the temperature for 0.5 to 8 hours, preferably for 1 to 4 hours;
b. adding to the obtained liquid:
   i. a source of sugar;
   ii. a tomato concentrate; and
   iii. an edible vegetable oil;
c. optionally, mixing the obtained preparation;
d. heating the so obtained composition to a temperature in the range of from 100 to 140 °C, preferably 105 to 135 °C, preferably 110 to 130 °C, preferably 115 to 125 °C to allow a Maillard reaction and maintaining the temperature for a period in the range of from 1 to 3 hours;
e. filtering the composition obtained after step d) and collecting the filtrate to obtain a liquid seaweed preparation;
f. optionally, combining the obtained liquid seaweed preparation with a food carrier; and
g. optionally, drying the combined liquid seaweed preparation and food carrier.

The flavour composition prepared by this process is a flavour product composition derived from a seaweed concentrate, and comprises at least three components from the group of 2-methylbutyraldehyde, 5-methylfurfural, furfural, 2(E)-decenal, and isobutyr aldehyde.

### Seaweed extract

The food product of the invention contains a seaweed concentrate or product derived therefrom comprising glutamate and at least two of AMP, CMP, GMP and UMP. The invention further provides for a food product containing a seaweed concentrate or products derived therefrom, wherein at least part of the, and preferably all of the glutamate and the at least two of AMP, CMP, GMP and UMP are obtained from seaweed. Suitably, these can be obtained from the seaweed by the heating process as described herein. It is believed that the presence of at least two of those ribonucleotides provide a significant enhancement to the umami flavour obtained from glutamate, and in particular enhances or even introduces the presence of the meaty notes in the obtained boiling liquid flavour, especially in the concentrate obtained therefrom. The products of the invention to not only contain a sufficient amount of MSG, but also contains ribonucleotides and nucleotides that both enhance and further increase the umami and meaty flavour notes perception of the product of the invention. It has been found that, in addition to MSG, the flavour products of the invention further contain at least two of AMP, CMP, GMP and UMP. These components are believed to contribute to the meaty flavour notes present in combination with umami flavour enhancement obtained by the presence of MSG. In a preferred embodiment, at least three of those ribonucleotides and nucleotides are present in addition to MSG. In a further preferred embodiment, all 4 are present.

Thus, in a highly preferred embodiment the product of the invention contains a seaweed concentrate comprising glutamate and AMP, CMP, GMP, UMP.

"Preferably, the term "seaweed" refers to macroscopic, multicellular, marine algae, preferably of a division selected from *Rhodophyta, Phaeophyta* and *Chlorophyta,* preferably of a genus selected from *Codium, Caulerpa, Fucus, Gracilaria, Laminaria, Macrocystis, Monostroma, Palmaria, Porphyra, Sargassum, Ulva,* and mixtures thereof, preferably of the genus *Fucus* and/or *Codium,* preferably to the species *Fucus serratus, Fucus vesiculosus, Fucus spiralis, Codium tomentosum, Palmaria palmatain, Ulva Lactuca, Porphyra umbilicalis, Gracilaria gracilis,* and mixtures thereof. Particularly preferably, the term "seaweed" refers to the species *Fucus serratus, Fucus vesiculosus, Fucus spiralis, Codium tomentosum* and mixtures thereof, especially preferably to the species *Fucus serratus, Codium tomentosum* and mixtures thereof, further preferably to the species *Fucus serratus.".*

It has been found that these ribonucleotides are present in seaweed and in particular in Fucus serratus. Thus, the invention further provides for a food product containing a seaweed concentrate or products derived therefrom, wherein the glutamate and the at least two of AMP, CMP, GMP and UMP are obtained from seaweed. In a further preferred embodiment, the at least two or more of AMP, CMP, GMP and UMP are obtained from Fucus serratus.

The 4 ribonucleotides (ribonucleoside 5'-monophosphate) referred to are

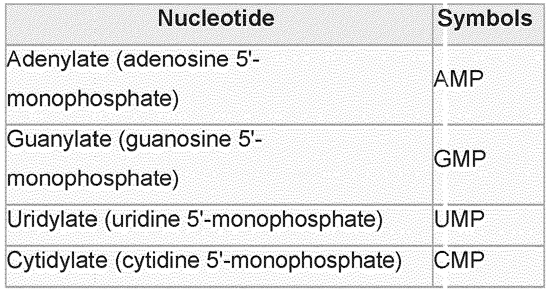

Suitably, these can be obtained from the seaweed by heating said seaweed and water to a temperature in the range of 100 to 140°C and maintaining the temperature for 0.5 to 8 hours, preferably for 1 to 4 hours. Time and temperature indicated are to be chosen such that the lower the temperature, the longer the time is to be set in order to allow a good extraction to take place. Thus, for example, at a temperature of from 140°C, maintaining this temperature for 0.5 to 1 hour is likely to be sufficient, whereas at a temperature of 100°C, the time needed for sufficient extraction is suitably chosen in the range of 4 to 8 hours. The man skilled in the art will understand that the temperature does not need to be maintained at exactly that temperature to which it was heated, but that it is suitably maintained within the range of from 100 to 140°C.

It was found that the use of Fucus serratus provides a desirable flavour concentrate having umami and/or meaty notes. In particular, good flavour results with umami and meaty/beefy notes were obtained from seaweed species of the Fucus serratus. By combining different seaweeds, a flavour composition with flavour notes from the different starting species can be obtained.

The seaweed applied is suitably a dried seaweed. Dried seaweed that is suitable for a process of the invention can be obtained by drying in any process suitable thereto as known to the man skilled in the art.

### Process for making the flavour composition

The flavour composition that is used for the producing of the food product of the current invention is suitably and preferably prepared by:
a. preparing a seaweed concentrate by mixing fresh or dried seaweed and water, and optionally adjusting the pH of the mixture to a pH in the range of from 6.5 to 9.5, and heating the so obtained mixture to a temperature in the range of 100 to 140°C and maintaining the temperature for 0.5 to 8 hours, preferably for 1 to 4 hours;
b. adding to the obtained seaweed concentrate:
   i. a source of sugar;
   ii. a tomato concentrate; and
   iii. an edible vegetable oil;
c. optionally, mixing the obtained preparation;
d. heating the so obtained composition to a temperature in the range of from 100 to 140 °C, preferably 105 to 135 °C, preferably 110 to 130 °C, preferably 115 to 125 °C to allow a Maillard reaction and maintaining the temperature for a period in the range of from 1 to 3 hours;
e. filtering the composition obtained after step d) and collecting the filtrate to obtain a liquid seaweed preparation;
f. optionally, combining the obtained liquid seaweed preparation with a food carrier; and
g. optionally, drying the combined liquid seaweed preparation and food carrier.

In a preferred embodiment, the liquid seaweed preparation is mixed with a food carrier. Depending on the food products and the consistency of the food products the flavour composition is used in, the food carrier containing liquid seaweed preparation can be applied as such, or dried. It is preferred that the seaweed preparation is dried after step e), so that a dried powder or granulate is obtained.

The filtering of step e) is suitably carried out with a filter having a mesh size of from 30 to 70 preferably of from 35 to 65 µm, preferably of from 40 to 60 µm, preferably of from 45 to 55 µm.

Preferably, after filtering, the liquid seaweed preparation has a dry matter content of up to 40 wt.-%, preferably up to 35 wt.-%, preferably up to 30 wt.-%, preferably up to 25 wt.-%, based on the total weight of the seaweed preparation.

In the process of the preparation of the flavour composition it is preferred that in step a) the pH of the mixture of water and seaweed is adjusted to a pH in the range of from 6.5 to 9.5, further preferred in the range of from 7 to 9, and more preferred in the range of from 7.5 to 8.5 before the heating step is carried out.

Preferably, in the process of the preparation of the flavour composition after step a), and before step d) the pH is adjusted to a pH in the range of from 3.5 to 6.5, preferably in the range of from 4 to 6, particularly preferably in the range of from 4.5 to 5.5.

In another preferred embodiment, the pH is adjusted to a pH in the range of from 4.5 to 7.5, preferably in the range of from 5 to 7, preferably in the range of from 5.5 to 6.5, before any of the optional steps f) and/or g) is carried out.

In a further preferred embodiment, the pH is adjusted in two or more of the above preferred embodiments, even further preferred in all steps a), d) and before step f) or g).

Time and temperature indicated in step a) are to be chosen as described for the preparation of the seaweed concentrate.

The term "sugar source" refers to any source providing sugars, i.e. mono-, di-, oligo- and/or polysaccharides, preferably sucrose, maltose, dextrose, glucose, fructose, xylose and/or arabinose. Preferably the term "sugar source" excludes any animal-based source, such as a source obtained from an animal's body, such that the sugar source is then considered vegetarian. Preferably the term "sugar source" excludes any animal-derived source, such as a source of animal origin, such that the sugar source is considered vegan.

The source of sugar is suitably chosen from a natural sugar source or a sugar source on natural basis, preferably a sugar source selected from the group consisting of agave syrup, barley malt syrup, date syrup, fig syrup, honey, maple syrup, rice syrup, fruit juice concentrate, preferably fruit juice concentrate from apple or pear or mixtures thereof, vegetable juice concentrate, preferably vegetable juice concentrate from onion or carrot or mixtures thereof, and mixtures thereof.

The tomato concentrate preferably is tomato serum.

The edible vegetable oil preferably is chosen from a vegetable oil that is pourable at 20°C. Suitable examples include sunflower oil, soybean oil, and rapeseed oil, and mixtures comprising any thereof. Preferably the term refers to a vegetable oil selected from the group consisting of borage oil, thistle oil, peanut oil, hazelnut oil, coconut oil, pumpkin seed oil, linseed oil, corn oil, macadamia nut oil, almond oil, olive oil, palm kernel oil, pecan nut oil, pistachio kernel oil, rapeseed oil, rice germ oil, sesame oil, soybean oil, sunflower oil, walnut oil, wheat germ oil fractions, and mixtures thereof.

Preferably, the food carrier is selected from the group consisting of corn-starch, onion concentrate, preferably onion powder, flours, fibres, preferably oat fibres or wheat fibres or mixtures thereof, meat powder, vegetable powder, and mixtures thereof. Preferably, the food carrier is a solid carrier, and in a further preferred embodiment, this solid carrier is in powder form.

Preferably, the food carrier is cornstarch and onion concentrate, preferably cornstarch and onion powder.

Preferably, in case the food carrier is or includes onion concentrate or onion powder, the amount of onion concentrate or onion powder added in the process is such that no onion flavour is provided by the onion concentrate or onion powder in the mixture.

Where more than one food carrier is applied, the addition thereof in step f) can be simultaneous with or without prior mixing, or subsequent in any order.

The term "to allow a Maillard reaction" e.g., as in step d) of the method according to the invention preferably refers to providing the chemical conditions for a Maillard reaction to take place, preferably the term excludes methods steps intended to prevent a Maillard reaction.

In the process of the preparation of the flavour composition that the weight ratio of the added sugar source to the dry seaweed of step a) preferably is in the range of 1:1 to 1:5, further preferred in the range of 1:1.25 to 1:4, more preferred in the range of 1:1.5 to 1:3, and most preferred in the range of 1:1.75 to 1:2.5.

In another embodiment it is preferred that in the process of the preparation of the flavour composition the weight ratio of the added tomato concentrate to the dried seaweed present in the mixture of step a) is in the range of from 1:1 to 1:5, preferably in the range of from 1:1.25 to 1:4, preferably in the range of from 1:1.5 to 1:3, preferably in the range of from 1:1.75 to 1:2.5.

Additionally or alternatively, it is preferred in the method according to the invention that the weight ratio of the added vegetable oil to the seaweed present in the mixture obtained after step a) is in the range of from 1:1 to 1:5, preferably in the range of from 1:1.25 to 1:4, preferably in the range of from 1:1.5 to 1:3, preferably in the range of from 1:1.75 to 1:2.5.

A suitable manner for measuring the dry matter content is found by subtracting the water content from the total weight of the preparation, for which the dry matter content shall be determined. Preferably, the water content is determined by a halogen moisture analyser.

Preferably, the dry matter content, as used herein, refers to the soluble dry matter content. In another preferred embodiment, the flavour composition is prepared by:
a. preparing a seaweed concentrate by mixing fresh or dried seaweed and water, and optionally adjusting the pH of the mixture to a pH in the range of from 6.5 to 9.5, and heating the so obtained mixture to a temperature in the range of 100 to 140°C and maintaining the temperature for 0.5 to 8 hours, preferably 1 to 4 hours;
b. adding to the obtained seaweed concentrate:
   iv. a source of sugar;
   v. a tomato concentrate; and
   vi. a vegetable oil;
c. optionally, mixing the obtained preparation;
d. heating the so obtained composition to a temperature in the range of from 100 to 140 °C, preferably 105 to 135 °C, preferably 110 to 130 °C, preferably 115 to 125 °C to allow a Maillard reaction and maintaining the temperature for a period in the range of from 1 to 3 hours;
e. filtering the composition obtained after step d) and collecting the filtrate to obtain a liquid seaweed preparation;
f. combining the obtained liquid seaweed preparation with a food carrier; and
g. drying the product of obtained in step f).

The drying in step g) is preferably performed by a method selected from the group consisting of heat drying, sun drying, hot air drying, drum drying, heat pump drying, combined air and heat pump drying, vacuum oven drying, freeze drying, spray drying, and (vacuum) belt drying. Preferably the drying is performed until a residual water content of at most 7.5 wt.-%, preferably at most 6 wt.-%, preferably at most 5 wt.-%, based on the total weight of the dried mixture.

Preferably, the drying temperature in step g) is in the range of 100 to 180 °C, preferably in the range of 110 to 170 °C, preferably in the range of 120 to 160 °C. Additionally or alternatively, the drying is preferably performed for a time in the range of 0.5 to 15 min, preferably in the range of 0.75 min to 10 min, preferably in the range of 1 to 5 min. The drying process effects a stabilization of the flavour composition. Reducing the water content prevents or reduces the degradation of its contents. Due to the drying process, the flavour composition can be stored and a further processing step directly after obtaining flavour composition is not compulsory.

### Examples

### Example 1: Producing a flavouring composition

111 g of seaweed powder (Fucus serratus) was provided and mixed with 664 g of water. The pH of the resulting mixture was adjusted to pH = 8 with 0.45 % NaOH.

The obtained mixture was heated to 120 °C for 2 h.

To this mixture, 50 g agave syrup, 49.5 g tomato serum and 55 g vegetable oil were added. Subsequently, the pH of the resulting mixture was adjusted to pH = 5 with 6.6 % lemon juice concentrate. The mixture was heated to 120 °C for 2 h and subsequently filtered with a filter press to remove the remaining seaweed material.

A liquid seaweed preparation with a dry matter content of 20 wt.% was obtained. The pH value measured for this preparation was at pH = 3.7.

The pH of the preparation was adjusted to pH = 6 with 2.2 % NaOH, after which,
250 g cornstarch and 50 g onion powder were added.

The obtained mixture was subsequently dried to a dry matter content in a range of 96 to 99 wt.% to obtain a dried Seaweed product A.

### Example 2: Producing a flavouring composition (comparative example)

111 g of seaweed powder (Fucus serratus) was provided and mixed with 664 g of water. The pH of the resulting mixture was adjusted to pH = 8 with 0.45 % NaOH.

The obtained mixture was heated to 120 °C for 2 h., after which it was
filtered with a filter press to obtain a filtrate with a dry matter content of 5 wt.%. The filtrate obtained is Seaweed product B (comparative sample).

### Example 3: Analysis of components

Seaweed product A of Example 1 was analysed for its flavour components via HPLC. Seaweed product B of Example 2 was analysed for its flavour components via HPLC. The Fucus serratus seaweed powder used in the preparation of products A and B was also analysed for its flavour components via HPLC. The amounts indicated are parts by weight. The results of the analysis are provided in table 1.

**Table 1**

| | | Seaweed Product A | Seaweed Product B | Seaweed Fucus serratus |
|---|---|---|---|---|
| Component a) | 2-methylbutyraldehyde | 26.06 | 0.13 | -- |
| Component b) | 5-methylfurfural | 2.87 | 0.07 | -- |

| | | | | |
|---|---|---|---|---|
| Component c) | furfural | 2.71 | -- | -- |
| Component d) | 2(E)-decenal | 4.66 | -- | 0.39 |
| Component e) | isobutyr aldehyde | 2.37 | -- | -- |
| Component f) | myristic acid | 2.35 | 53.87 | 44.14 |
| Component g) | palmitic acid | 7.32 | 16.75 | 8.49 |
| Component h) | lauric acid | -- | 1.02 | 1.16 |
| Component i) | oleic acid | 2.55 | 5.65 | 4.48 |
| Sum a) to e) | | 38.67 | 0.19 | 0.39 |
| Sum f) to g) | | 9.67 | 70.65 | 52.63 |
| Sum h) to i) | | 2.55 | 6.67 | 5.64 |
| Sum f) to i) | | 12.22 | 77.32 | 58.27 |

The product analysis revealed several further components present in these products. All of these were present in very low amounts and therefore discarded as not having an impact on the overall taste characteristics. For reasons of comparing the three products, where components were present in all three products in similar amounts these are not mentioned above.

### Example 4: Sensory evaluation

### Example 4.1: Comparison to other seaweed extract

three flavour powders were prepared as follows:
A seaweed product was prepared as described in Example 1.
Another seaweed product was prepared as described in Example 2.
A bouillon base powder was prepared by mixing the ingredients indicated in table 2:

**Table 2:**

| Bouillon Base ingredients | |
|---|---|
| ingredient | Amount [wt.%] |
| Salt | 39.5 |
| Starch | 40.1 |
| Sugar | 4.3 |
| Oil | 3.8 |
| Vegetables | 5.8 |
| Spices | 0.2 |
| Herbs | 0.2 |
| Yeast extract | 6.1 |

This bouillon base powder was used for the preparation of three bouillons as follows:
Reference Bouillon: 2.0 g of the bouillon base was added to 98 g of water to obtain 100 g of bouillon. This was heated to 100°C under gentle stirring.

Seaweed bouillon A (according to the invention): 1.96 g of the Bouillon Base and 0.04 g of seaweed product prepared as described in example 1 were added to an amount of water to obtain 100 g of bouillon. This was heated to 100°C under gentle stirring.

Seaweed bouillon B (comparison): 1.96 g of the Bouillon Base and 0.04 g of seaweed product prepared as described in example 2 were added to an amount of water to obtain 100 g of bouillon. This was heated to 100°C under gentle stirring.

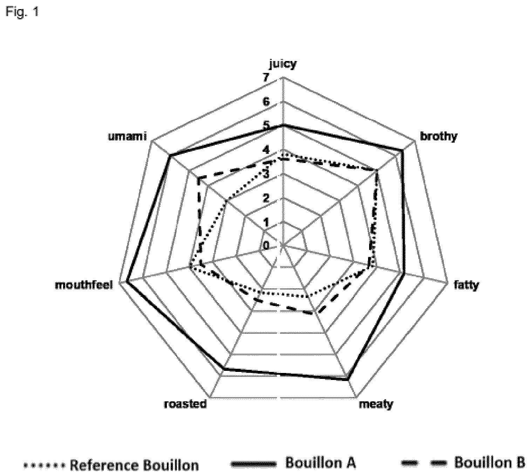

Consent tasting and determination of several taste impressions was performed by an expert panel of 12 panellists. Thereto, the bouillon preparations where each poured in a drinking bowl, tasted and evaluated. The evaluation was based on the descriptors "meaty", "roasted", "mouthfeel", "umami", "juicy", "brothy" and "fatty", the results are provided in table 3 and are also shown in Fig. 1.

**Table 3:**

| | Reference Bouillon | Seaweed bouillon A (invention) | Seaweed bouillon B (comparative) |
|---|---|---|---|
| Meaty | 2.3 | 6.2 | 3.2 |
| Roasted | 2.2 | 5.7 | 2.5 |
| Mouthfeel | 4.0 | 6.7 | 3.5 |
| Umami | 3.0 | 6.0 | 4.5 |
| Juicy | 3.8 | 5.0 | 3.6 |
| Brothy | 5.0 | 6.3 | 5.0 |
| Fatty | 3.8 | 5.2 | 3.7 |

As can be seen from these test results, Seaweed bouillon B had a more profound meaty, slightly roasted and umami taste when compared to the reference bouillon. The Seaweed bouillon A showed a strong increase in all tested taste descriptors that are closely correlated to the taste of meat (see also Fig. 1).

Moreover, it was surprisingly found that "green", "fishy" and "Kombu" notes, which were observed for the Seaweed bouillon B, were not or almost not observed for the food product containing Seaweed bouillon A.

### Example 4.2: Comparison to a meat flavour

A bouillon base powder was prepared as described in example 4.1 and table 2 above. This bouillon base powder was used for the preparation of three bouillons as follows:
Reference Bouillon: 2.0 g of the bouillon base was added to 98 g of water to obtain 100 g of bouillon. This was heated to 100°C under gentle stirring.

Seaweed bouillon C (according to the invention): 1.96 g of the Bouillon Base and 0.04 g of seaweed product prepared as described in example 1 were added to an amount of water to obtain 100 g of bouillon. This was heated to 100°C under gentle stirring

Beef bouillon D (comparison): 1.96 g of the Bouillon Base and 0.04 g beef meat powder obtained from meat were added to an amount of water to obtain 100 g of bouillon. This was heated to 100°C under gentle stirring.

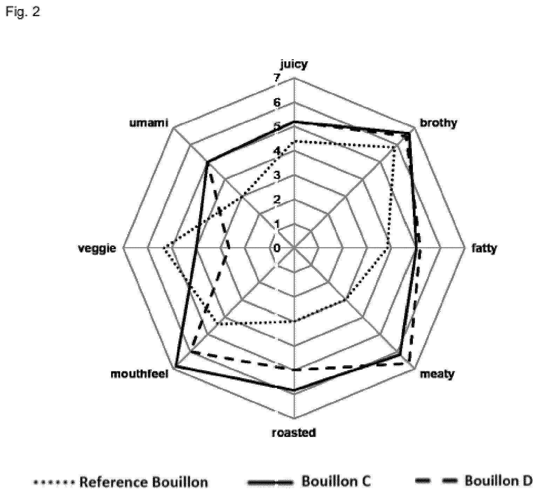

Consent tasting and determination of several taste impressions was performed by an expert panel of 12 panellists. Thereto, the bouillon preparations where each poured in a drinking bowl, tasted and evaluated. The evaluation was based on the descriptors "meaty", "roasted", "mouthfeel", "veggie", "umami", "juicy", "brothy" and "fatty". The results are indicated in table 4 and also shown in Fig. 2.

**Table 4**

| | Reference Bouillon | Seaweed Bouillon C (invention) | Beef Bouillon D (comparative) |
|---|---|---|---|
| Meaty | 3.0 | 6.2 | 6.7 |
| Roasted | 3.0 | 5.8 | 5.0 |
| Mouthfeel | 4.4 | 6.8 | 6.0 |
| Veggie | 5.3 | 4.0 | 2.7 |
| Umami | 3.0 | 5.0 | 5.0 |
| Juicy | 4.4 | 5.2 | 5.2 |
| Brothy | 5.8 | 6.7 | 6.5 |
| Fatty | 3.8 | 5.0 | 5.2 |

Seaweed Bouillon C according to the invention provided almost the same meaty flavour as the meat-derived flavour beef bouillon D. In addition, seaweed bouillon C provided similar sensory results as the reference meat derived flavour bouillon D.

## Claims

1. Food product comprising a seaweed concentrate or product derived therefrom, wherein the food product comprises at least three components from the group of 2-methylbutyraldehyde, 5-methylfurfural, furfural, 2(E)-decenal, and isobutyr aldehyde.

2. Food product according to claim 1, wherein the food product comprises at least 4, and preferably all 5 from the group of 2-methylbutyraldehyde, 5-methylfurfural, furfural, 2(E)-decenal, and isobutyr aldehyde.

3. Food product according to anyone of claims 1 to 2, wherein the food product further comprises myristic acid and/or palmitic acid.

4. Food product according to claim 3, wherein the food product further comprises glutamate and at least two of adenosine 5'-monophosphate (AMP), cytidine 5'-monophosphate (CMP), guanosine 5'-monophosphate (GMP) and uridine 5'-monophosphate (UMP).

5. Food product according to anyone of claims 1 to 4, wherein the food product further comprises glutamate and at least three and preferably all of adenosine 5'- monophosphate (AMP), cytidine 5'-monophosphate (CMP), guanosine 5'-monophosphate (GMP) and uridine 5'-monophosphate (UMP).

6. Food product according to anyone of claims 1-5, wherein the food product further comprises at least one of lauric acid and oleic acid.

7. Food product according to anyone of claims 1-6, wherein the food product comprises
a) 2-methylbutyraldehyde,
b) 5-methylfurfural,
c) furfural,
d) 2(E)-decenal,
e) isobutyr aldehyde,
f) myristic acid,
g) palmitic acid, and
h) optionally lauric acid and/or
i) optionally oleic acid;
wherein the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the food product.

8. Food product according to claim 7, wherein the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the food product.

9. Food product according to anyone of claims 1-8, wherein the food product is selected from soups, sauces, bouillons, savoury concentrates, dressings such as vinaigrettes and salad dressings, seasonings, condiments, snacks, meat analogues and /or meat extenders and/or meat substitutes.

10. Food products according to claim 9, wherein the food product is selected from meat analogues and /or meat extenders and/or meat substitutes.

11. A process for producing a food product according to anyone of claims 1 to 10, said process comprising combining an edible product with a flavour composition comprising a seaweed concentrate or product derived therefrom, and wherein the flavour composition comprises at least three components from the group of 2-methylbutyraldehyde, 5-methylfurfural, furfural, 2(E)-decenal, and isobutyr aldehyde.

12. A process for producing a food product according to claim 11, wherein the flavour composition comprises
a) 2-methylbutyraldehyde,
b) 5-methylfurfural,
c) furfural,
d) 2(E)-decenal,
e) isobutyr aldehyde,
f) myristic acid,
g) palmitic acid, and
h) optionally: lauric acid, and
i) optionally: oleic acid,
wherein the summed amount of components a) to e) is at least 5 parts by weight, preferably at least 7.5 parts by weight, preferably at least 10 parts by weight, preferably at least 15 parts by weight, preferably at least 20 parts by weight, preferably at least 25 parts by weight, preferably at least 30 parts by weight, preferably at least 35 parts by weight, based on the total weight of the flavour composition; and
wherein preferably the summed amount of components f) to i) is at most 50 parts by weight, preferably at most 45 parts by weight, preferably at most 40 parts by weight, preferably at most 35 parts by weight, preferably at most 30 parts by weight, preferably at most 25 parts by weight; preferably at most 20 parts by weight, preferably at most 15 parts by weight, based on the total weight of the composition.

13. Process according to claim 11 or 12, wherein the edible product is selected from soups, sauces, bouillons, savoury concentrates, dressings such as vinaigrettes and salad dressings, seasonings, condiments, snacks, meat analogues and /or meat extender and/or meat substitutes.

14. Process for the preparation of a food product according to anyone of claims 11 to 13, wherein at least part of the flavour ingredients present is obtained by:
a. preparing a seaweed concentrate from fresh or dried seaweed, by heating said seaweed and water to a temperature in the range of 100 to 140°C and maintaining the temperature for 0.5 to 8 hours, preferably for 1 to 4 hours;
b. adding to the obtained seaweed concentrate:
i. a source of sugar;
ii. a tomato concentrate; and
iii. a vegetable oil;
c. heating the so obtained composition to a temperature in the range of from 100 to 140 °C, preferably 105 to 135 °C, preferably 110 to 130 °C, preferably 115 to 125 °C to allow a Maillard reaction and maintaining the temperature for a period in the range of from 0.5 to 8 hours, preferably from 1 to 4 hours;
d. filtering the composition obtained after step c) and collecting the filtrate to obtain a liquid seaweed preparation;
e. optionally, combining the obtained liquid seaweed preparation with a food carrier; and
f. optionally, drying the combined liquid seaweed preparation and food carrier.

15. Process according to claim 14, wherein the liquid seaweed preparation is mixed with a food carrier selected from the group consisting of corn-starch, onion concentrate, preferably onion powder, flours, fibres, preferably oat fibres or wheat fibres or mixtures thereof, meat powder, vegetable powder, and mixtures thereof.

## Patentansprüche

1. Nahrungsmittelprodukt, das ein Meeresalgenkonzentrat oder ein daraus gewonnenes Produkt umfasst, wobei das Nahrungsmittelprodukt mindestens drei Komponenten aus der Gruppe 2-Methylbutyraldehyd, 5-Methylfurfural, Furfural, 2(E)-Decenal und Isobutyraldehyd umfasst.

2. Nahrungsmittelprodukt nach Anspruch 1, wobei das Nahrungsmittelprodukt mindestens 4 und vorzugsweise alle 5 Verbindungen aus der Gruppe 2-Methylbutyraldehyd, 5-Methylfurfural, Furfural, 2(E)-Decenal und Isobutyraldehyd umfasst.

3. Nahrungsmittelprodukt nach irgendeinem der Ansprüche 1 bis 2, wobei das Nahrungsmittelprodukt ferner Myristinsäure und/oder Palmitinsäure umfasst.

4. Nahrungsmittelprodukt nach Anspruch 3, wobei das Nahrungsmittelprodukt ferner Glutamat und mindestens zwei der Verbindungen Adenosin-5'-monophosphat (AMP), Cytidin-5'-monophosphat (CMP), Guanosin-5'-monophosphat (GMP) und Uridin-5'-monophosphat (UMP) umfasst.

5. Nahrungsmittelprodukt nach irgendeinem der Ansprüche 1 bis 4, wobei das Nahrungsmittelprodukt ferner Glutamat und mindestens drei und vorzugsweise alle der Verbindungen Adenosin-5'-monophosphat (AMP), Cytidin-5'-monophosphat (CMP), Guanosin-5'-monophosphat (GMP) und Uridin-5'-monophosphat (UMP) umfasst.

6. Nahrungsmittelprodukt nach irgendeinem der Ansprüche 1 bis 5, wobei das Nahrungsmittelprodukt ferner mindestens eine der Verbindungen Laurinsäure und Ölsäure umfasst.

7. Nahrungsmittelprodukt nach irgendeinem der Ansprüche 1 bis 6, wobei das Nahrungsmittelprodukt umfasst:
a) 2-Methylbutyraldehyd,
b) 5-Methylfurfural,
c) Furfural,
d) 2(E)-Decenal,
e) Isobutyraldehyd,
f) Myristinsäure,
g) Palmitinsäure und
h) optional Laurinsäure und/oder
i) optional Ölsäure;
wobei die Gesamtmenge der Komponenten a) bis e) mindestens 5 Gewichtsteile, vorzugsweise mindestens 7,5 Gewichtsteile, vorzugsweise mindestens 10 Gewichtsteile, vorzugsweise mindestens 15 Gewichtsteile, vorzugsweise mindesteins 20 Gewichtsteile, vorzugsweise mindestens 25 Gewichtsteile, vorzugsweise mindestens 30 Gewichtsteile, vorzugsweise mindestens 35 Gewichtsteile, bezogen auf das Gesamtgewicht des Nahrungsmittelprodukts, beträgt.

8. Nahrungsmittelprodukt nach Anspruch 7, wobei die Gesamtmenge der Komponenten f) bis i) höchstens 50 Gewichtsteile, vorzugsweise höchstens 45 Gewichtsteile, vorzugsweise höchstens 40 Gewichtsteile, vorzugsweise höchstens 35 Gewichtsteile, vorzugsweise höchstens 30 Gewichtsteile, vorzugsweise höchstens 25 Gewichtsteile, vorzugsweise höchstens 20 Gewichtsteile, vorzugsweise höchstens 15 Gewichtsteile, bezogen auf das Gesamtgewicht des Nahrungsmittelprodukts, beträgt.

9. Nahrungsmittelprodukt nach irgendeinem der Ansprüche 1 bis 8, wobei das Nahrungsmittelprodukt unter Suppen, Soßen, Bouillons, herzhaften Konzentraten, Dressings wie Vinaigretten und Salatdressings, Gewürzen, Würzmitteln, Snacks, Fleischanaloga und/oder Fleischstreckmitteln und /oder Fleischersatzprodukten ausgewählt ist.

10. Nahrungsmittelprodukte nach Anspruch 9, wobei das Nahrungsmittelprodukt aus Fleischanaloga und/oder Fleischstreckmitteln und/oder Fleischersatzstoffen ausgewählt ist.

11. Verfahren zur Herstellung eines Nahrungsmittelprodukts nach irgendeinem der Ansprüche 1 bis 10, wobei das Verfahren das Kombinieren eines essbaren Produkts mit einer Geschmackszusammensetzung umfasst, die ein Meeresalgenkonzentrat oder ein daraus gewonnenes Produkt umfasst und wobei die Geschmackszusammensetzung mindestens drei Komponenten aus der Gruppe 2-Methylbutyraldehyd, 5-Methylfurfural, Furfural, 2(E)-Decenal und Isobutyraldehyd umfasst.

12. Verfahren zur Herstellung eines Nahrungsmittelprodukts nach Anspruch 11, wobei die Geschmackszusammensetzung umfasst
a) 2-Methylbutyraldehyd,
b) 5-Methylfurfural,
c) Furfural,
d) 2(E)-Decenal,
e) Isobutyraldehyd,
f) Myristinsäure,
g) Palmitinsäure und
h) optional Laurinsäure und
i) optional Ölsäure,
wobei die Gesamtmenge der Komponenten a) bis e) mindestens 5 Gewichtsteile, vorzugsweise mindestens 7,5 Gewichtsteile, vorzugsweise mindestens 10 Gewichtsteile, vorzugsweise mindestens 15 Gewichtsteile, vorzugsweise mindestens 20 Gewichtsteile, vorzugsweise mindestens 25 Gewichtsteile, vorzugsweise mindestens 30 Gewichtsteile, vorzugsweise mindestens 35 Gewichtsteile, bezogen auf das Gesamtgewicht der Geschmackszusammensetzung, beträgt, und wobei die Gesamtmenge der Komponenten f) bis i) vorzugsweise höchstens 50 Gewichtsteile, vorzugsweise höchstens 45 Gewichtsteile, vorzugsweise höchstens 40 Gewichtsteile, vorzugsweise höchstens 35 Gewichtsteile, vorzugsweise höchstens 30 Gewichtsteile, vorzugsweise höchstens 25 Gewichtsteile, vorzugsweise höchstens 20 Gewichtsteile, vorzugsweise höchstens 15 Gewichtsteile, bezogen auf das Gesamtgewicht der Zusammensetzung, beträgt.

13. Verfahren nach Anspruch 11 oder 12, wobei das essbare Produkt unter Suppen, Saucen, Bouillons, herzhaften Konzentraten, Dressings, wie Vinaigretten und Salatdressings, Gewürzen, Würzmitteln, Snacks, Fleischanaloga und/oder Fleischstreckmitteln und/oder Fleischersatzmitteln ausgewählt ist.

14. Verfahren zur Herstellung eines Nahrungsmittels nach irgendeinem der Ansprüche 11 bis 13, wobei mindestens ein Teil der vorliegenden Geschmacksbestandteile erhalten wird durch:
a. Herstellen eines Meeresalgenkonzentrats aus frischen oder getrockneten Meeresalgen durch Erhitzen der Meeresalgen und Wasser auf eine Temperatur in dem Bereich von 100 bis 140°C und Aufrechterhaltung der Temperatur für 0,5 bis 8 Stunden, vorzugsweise für 1 bis 4 Stunden;
b. Zusetzen zu dem erhaltenen Meeresalgenkonzentrat:
i. eine Zuckerquelle;
ii. ein Tomatenkonzentrat; und
iii. ein Pflanzenöl;
c. Erhitzen der so erhaltenen Zusammensetzung auf eine Temperatur in dem Bereich von 100 bis 140°C, vorzugsweise von 105 bis 135°C, vorzugsweise von 110 bis 130°C, vorzugsweise von 115 bis 125°C, um eine Maillard-Reaktion zu ermöglichen, und Aufrechterhaltung der Temperatur für einen Zeitraum in dem Bereich von 0,5 bis 8 Stunden, vorzugsweise von 1 bis 4 Stunden;
d. Filtern der nach Schritt c) erhaltenen Zusammensetzung und Sammeln des Filtrats, um eine flüssige Meeresalgenzubereitung zu erhalten;
e. optionales Kombinieren der erhaltenen flüssigen Meeresalgenzubereitung mit einem Nahrungsmittelträger; und
f. optionales Trocknen der kombinierten flüssigen Meeresalgenzubereitung und des Nahrungsmittelträgers.

15. Verfahren nach Anspruch 14, wobei die flüssige Meeresalgenzubereitung mit einem Nahrungsmittelträger gemischt wird, der aus der Gruppe ausgewählt ist, die aus Maisstärke, Zwiebelkonzentrat, vorzugsweise Zwiebelpulver, Mehlen, Fasern, vorzugsweise Haferfasern oder Weizenfasern oder Mischungen davon, Fleischpulver, Gemüsepulver und Mischungen davon besteht.

## Revendications

1. Produit alimentaire comprenant un concentré d'algues ou un produit dérivé de celui-ci, dans lequel le produit alimentaire comprend au moins trois composants du groupe 2-méthylbutyraldéhyde, 5-méthylfurfural, furfural, 2(E)-décénal et aldéhyde isobutyrique.

2. Produit alimentaire selon la revendication 1, dans lequel le produit alimentaire comprend au moins 4, et de préférence la totalité des 5 composants du groupe 2-méthylbutyraldéhyde, 5-méthylfurfural, furfural, 2(E)-décénal et aldéhyde isobutyrique.

3. Produit alimentaire selon l'une quelconque des revendications 1 à 2, dans lequel le produit alimentaire comprend en outre de l'acide myristique et/ou de l'acide palmitique.

4. Produit alimentaire selon la revendication 3, dans lequel le produit alimentaire comprend en outre du glutamate et au moins deux parmi les composants adénosine 5'-monophosphate (AMP), cytidine 5'-monophosphate (CMP), guanosine 5'-monophosphate (GMP) et uridine 5'-monophosphate (UMP).

5. Produit alimentaire selon l'une quelconque des revendications 1 à 4, dans lequel le produit alimentaire comprend en outre du glutamate et au moins trois et de préférence la totalité des composants adénosine 5'-monophosphate (AMP), cytidine 5'-monophosphate (CMP), guanosine 5'-monophosphate (GMP) et uridine 5'-monophosphate (UMP).

6. Produit alimentaire selon l'une quelconque des revendications 1 à 5, dans lequel le produit alimentaire comprend en outre au moins l'un parmi acide laurique et acide oléique.

7. Produit alimentaire selon l'une quelconque des revendications 1 à 6, dans lequel le produit alimentaire comprend
a) du 2-méthylbutyraldéhyde,
b) du 5-méthylfurfural,
c) du furfural,
d) du 2(E)-décénal,
e) de l'aldéhyde isobutyrique,
f) de l'acide myristique,
g) de l'acide palmitique, et
h) éventuellement de l'acide laurique et/ou
i) éventuellement de l'acide oléique ;
dans lequel la somme totale des composants a) à e) est au moins de 5 parties en poids, de préférence au moins de 7,5 parties en poids, de préférence au moins de 10 parties en poids, de préférence au moins de 15 parties en poids, de préférence au moins de 20 parties en poids, de préférence au moins de 25 parties en poids, de préférence au moins de 30 parties en poids, de préférence au moins de 35 parties en poids, sur la base du poids total du produit alimentaire.

8. Produit alimentaire selon la revendication 7, dans lequel la somme totale des composants f) à i) est au plus de 50 parties en poids, de préférence au plus de 45 parties en poids, de préférence au plus de 40 parties en poids, de préférence au plus de 35 parties en poids, de préférence au plus de 30 parties en poids, de préférence au plus de 25 parties en poids, de préférence au plus de 20 parties en poids, de préférence au plus de 15 parties en poids, sur la base du poids total du produit alimentaire.

9. Produit alimentaire selon l'une quelconque des revendications 1 à 8, dans lequel le produit alimentaire est sélectionné parmi soupes, sauces, bouillons, concentrés salés, sauces aromatisées telles que vinaigrettes et sauces à salade, assaisonnements, condiments, en-cas, analogues de viande et/ou allongeurs de viande et/ou succédanés de viande.

10. Produits alimentaires selon la revendication 9, dans lequel le produit alimentaire est sélectionné parmi analogues de viande et/ou allongeurs de viande et/ou succédanés de viande.

11. Procédé de production d'un produit alimentaire selon l'une quelconque des revendications 1 à 10, ledit procédé comprenant la combinaison d'un produit comestible avec une composition aromatique comprenant un concentré d'algues ou un produit dérivé de celui-ci, et dans lequel la composition aromatique comprend au moins trois composants du groupe 2-méthylbutyraldéhyde, 5-méthylfurfural, furfural, 2(E)-décénal et aldéhyde isobutyrique.

12. Procédé de production d'un produit alimentaire selon la revendication 11, dans lequel la composition aromatique comprend
a) du 2-méthylbutyraldéhyde,
b) du 5-méthylfurfural,
c) du furfural,
d) du 2(E)-décénal,
e) de l'aldéhyde isobutyrique,
f) de l'acide myristique,
g) de l'acide palmitique, et
h) éventuellement : de acide laurique et
i) éventuellement : de l'acide oléique,
dans lequel la somme totale des composants a) à e) est au moins de 5 parties en poids, de préférence au moins de 7,5 parties en poids, de préférence au moins de 10 parties en poids, de préférence au moins de 15 parties en poids, de préférence au moins de 20 parties en poids, de préférence au moins de 25 parties en poids, de préférence au moins de 30 parties en poids, de préférence au moins de 35 parties en poids, sur la base du poids total de la composition aromatique ; et
dans lequel de préférence la somme totale des composants f) à i) est au plus de 50 parties en poids, de préférence au plus de 45 parties en poids, de préférence au plus de 40 parties en poids, de préférence au plus de 35 parties en poids, de préférence au plus de 30 parties en poids, de préférence au plus de 25 parties en poids, de préférence au plus de 20 parties en poids, de préférence au plus de 15 parties en poids, sur la base du poids total de la composition.

13. Procédé selon la revendication 11 ou 12, dans lequel le produit comestible est sélectionné parmi soupes, sauces, bouillons, concentrés salés, sauces aromatisées telles que vinaigrettes et sauces à salade, assaisonnements, condiments, en-cas, analogues de viande et/ou allongeurs de viande et/ou succédanés de viande.

14. Procédé pour la préparation d'un produit alimentaire selon l'une quelconque des revendications 11 à 13, dans lequel au moins une partie des ingrédients aromatiques présents est obtenue par :
a. la préparation d'un concentré d'algues à partir d'algues fraîches ou séchées, par chauffage desdites algues et d'eau à une température dans la plage de 100 à 140 °C et par maintien de la température pendant 0,5 à 8 heures, de préférence pendant 1 à 4 heures ;
b. l'ajout au concentré d'algues obtenu de :
i. une source de sucre ;
ii. un concentré de tomate ; et
iii. une huile végétale ;
c. le chauffage de la composition ainsi obtenue à une température dans la plage de 100 à 140 °C, de préférence de 105 à 135 °C, de préférence de 110 à 130 °C, de préférence de 115 à 125 °C pour permettre une réaction de Maillard et le maintien de la température pendant une période dans la plage de 0,5 à 8 heures, de préférence de 1 à 4 heures ;
d. le filtrage de la composition obtenue après l'étape c) et la collecte du filtrat pour obtenir une préparation d'algues liquide ;
e. éventuellement, la combinaison de la préparation liquide à base d'algues obtenue et d'un support alimentaire ; et
f. éventuellement, le séchage de la préparation liquide à base d'algues et du support alimentaire combinés.

15. Procédé selon la revendication 14, dans lequel la préparation liquide à base d'algues est mélangée à un support alimentaire sélectionné dans le groupe consistant en fécule de maïs, concentré d'oignon, de préférence poudre d'oignon, farines, fibres, de préférence fibres d'avoine ou fibres de blé ou mélanges de celles-ci, poudre de viande, poudre de légumes, et mélanges de ceux-ci.
